# EUROPEAN PATENT SPECIFICATION

(11) **EP 1 682 854 B1**
(45) Date of publication and mention of the grant of the patent: **01.10.2014**
(21) Application number: 04793982.2
(22) Date of filing: 01.10.2004
(51) Int. Cl.: G01C 19/56, G01C 19/5719

(54) **MODULATION METHOD FOR SIGNAL CROSSTALK MITIGATION IN ELECTROSTATICALLY DRIVEN DEVICES**
MODULATIONSVERFAHREN ZUR VERRINGERUNG VON SIGNALÜBERSPRECHEN IN ELEKTROSTATISCH ANGESTEUERTEN EINRICHTUNGEN
PROCEDE DE MODULATION DESTINE A REDUIRE LA DIAPHONIE DANS DES DISPOSITIFS ELECTROSTATIQUES

(30) Priority: 14.11.2003 US 714199
(43) Date of publication of application: 26.07.2006
(73) Proprietor: Northrop Grumman Systems Corporation, Los Angeles, CA 90067-2199 (US)
(72) Inventor: TAZARTES, Daniel, A., West Hills, California 91304 (US); MARK, John, G., Pasadena, California 91106 (US)
(74) Representative: Skone James, Robert Edmund
(86) International application number: PCT/US2004/032391
(87) International publication number: WO 2005/052512

(56) References cited:
- WO-A-01/22094
- US-A1- 2002 020 219

## Description

### BACKGROUND OF THE INVENTION

### 1. Field of the Invention

The present invention relates generally to a method for reducing the effect of electrical cross-coupling in micro-electromechanical systems, and more particularly to a modulation method for signal crosstalk mitigation in electrostatically driven devices.

### 2. Description of the Related Art

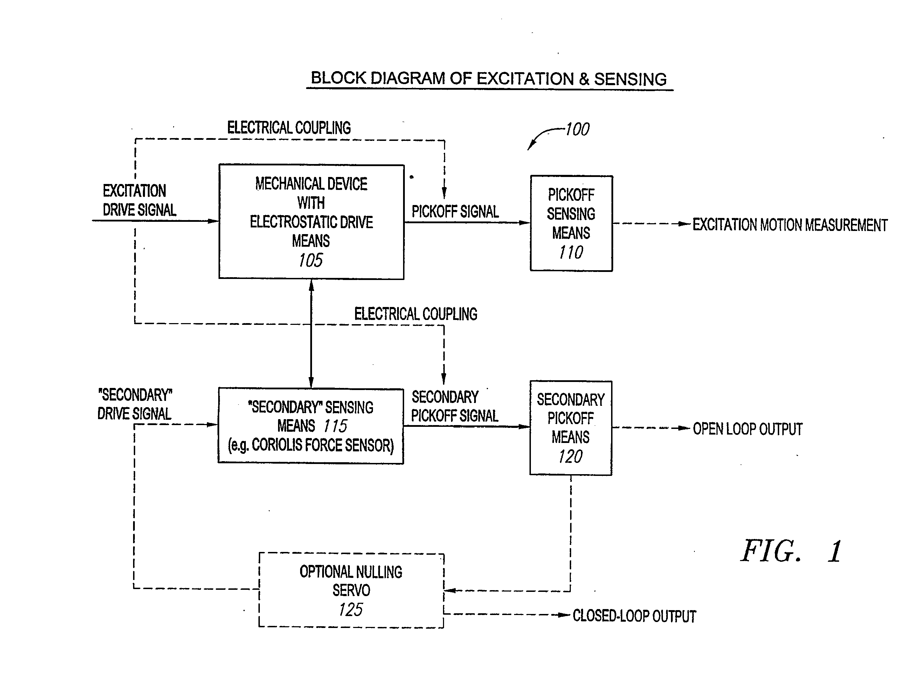

A micro-electromechanical system (MEMS) may be used to sense the changes in rotation of a resonant element, among other things, and may be fabricated using a variety of different structures (e.g., gyroscopes) as the resonant element. FIG. 1 is a block diagram of a prior art MEMS 100, which typically uses a primary device 105 having an electrostatic capacitive drive that receives excitation drive signals and produces a primary vibratory motion as detected by a primary pickoff signal (e.g., an oscillatory signal). The characteristics (e.g., amplitude and phase) of the primary pickoff signal may be sensed and controlled using a primary pickoff sensing device 110, which outputs an excitation motion measurement, which is used to set the basic motion amplitude. The primary device 105 may be coupled to a secondary device 115 (e.g., a Coriolis vibratory rate sensor) for producing a secondary vibratory motion responsive to an external parameter (e.g., angular rate in the case of a gyro). Such motion may be sensed and controlled using a secondary pickoff sensing device 120. The secondary pickoff sensing device 120 may be used to measure the characteristics of the secondary pickoff signal and may provide an open loop output at, for example, 2,000 Hz.

The MEMS 100 may also include a nulling servo 125 whose input is coupled to the secondary pickoff sensing device 120 and whose output is coupled to the secondary device 115. The nulling servo 125 receives the secondary pickoff signal and generates an oscillatory feedback signal that is used to null the secondary pickoff signal as sensed by the secondary pickoff sensing device 120. Consequently, a feedback signal, which becomes the measurement of the desired characteristic (e.g., angular rate measurement for a gyroscope) is produced at the output of the nulling servo 125 and is fed into the secondary device 115. The nulling servo 125 may also produce a closed-loop output.

The primary and secondary devices 105, 115 may include high Q mechanical systems that are used to provide mechanical amplification of the primary vibratory signal or the secondary vibratory signal or both. The high Q mechanical systems have peak responses at the resonant frequency leading to oscillatory motion that is substantially sinusoidal. Therefore, in either the open loop or closed loop configuration, the primary and secondary pickoff signals may be demodulated to extract or remove the excitation frequency (i.e., amplitude and phase) of the motion and obtain a measure of the motion carried by the excitation drive signal.

One drawback of conventional MEMS is the problems associated with electrical cross-coupling. Electrical cross-coupling often occurs because the MEMS devices and structures are very small and produce stray capacitances that are significant compared to the actual variable capacitance used for the primary and secondary pickoff signals. Also, the primary and secondary pickoff signals are much smaller than the excitation drive signal. Hence, electrical cross-coupling of the excitation drive signals into the primary and secondary pickoff signals is very likely and generally unavoidable. Thus, it should be appreciated that there is a need for a method for reducing the effect of electrical cross-coupling in micro-electromechanical systems. The present invention fulfills this need as well as others. In one embodiment, the invention is a method of distinguishing a drive signal from a pickoff signal for attenuating the effect of electrical cross-coupling between the drive signal and the pickoff signal in an electrostatically driven device with capacitive pickoff, the method comprising:
receiving an input signal at a first frequency in the form of a plurality of data values;
randomly changing the polarity of at least one of the plurality of data values of the input signal to form a sensor drive signal,
driving a sensor, with the sensor drive signal and
detecting sensor response for producing a pickoff signal.

These and other features and advantages of the embodiments of the invention will become apparent from the following detailed description, taken in conjunction with the accompanying drawings, which illustrate, by way of example the principles of the invention.

### BRIEF DESCRIPTION OF THE DRAWINGS

FIG. 1 is a block diagram of a prior art micro-electromechanical system, which typically uses a primary device having an electrostatic capacitive drive that receives excitation drive signals and produces a primary pickoff signal;
FIG. 2 is a block diagram of a MEMS having a primary random polarity inverter, a secondary random polarity inverter and a signal generator for generating a half-frequency sinusoidal signal that is fed into the primary random polarity inverter in accordance with an embodiment of the present invention;
FIG. 3 is a graph showing a half-frequency sinusoidal signal in accordance with an embodiment of the present invention;
FIG. 4 is a graph showing a half-frequency sinusoidal signal with polarity randomization in accordance with an embodiment of the present invention; and
FIG. 5 is a graph showing a half-frequency sinusoidal signal with polarity randomization at or near zero crossings in accordance with an embodiment of the present invention.

### DETAILED DESCRIPTION OF THE PRESENTLY PREFERRED EMBODIMENTS

Devices that implement the embodiments of the various features of the present invention will now be described with reference to the drawings. The drawings and the associated descriptions are provided to illustrate embodiments of the present invention and not to limit the scope of the present invention. Reference in the specification to "one embodiment" or "an embodiment" is intended to indicate that a particular feature, structure, or characteristic described in connection with the embodiment is included in at least an embodiment of the invention. The appearances of the phrase "in one embodiment" in various places in the specification are not necessarily all referring to the same embodiment. Throughout the drawings, reference numbers are re-used to indicate correspondence between referenced elements. In addition, the first digit of each reference number indicates the figure in which the element first appears.

The primary device 105 and the secondary device 115 may be excited by applying a biased excitation signal or voltage, such as V = V₀ + Vₑ cosωt, to the input of the device. For devices operating at high Q with resonance at or near angular frequency ω, the cosωt term may provide most of the mechanical excitation resulting in excitation motion at or near angular frequency ω. Thus, the excitation voltage and the excitation motion are at substantially the same frequency. In this situation, the primary pickoff sensing device 110 may sense a small motion signal at the angular frequency ω. In addition, the primary pickoff sensing device 110 may sense a large excitation signal that has been introduced into the primary pickoff signal due to electrical cross-coupling. Since the excitation voltage is at substantially the same frequency as the excitation motion, the excitation voltage may be incorrectly interpreted as the excitation motion.

The half-frequency sinusoidal signal may be an un-biased excitation voltage having the formula V = Vₑ cos½ωt. Due to the nature of voltage excitation of a capacitive forcer, the effective physical excitation will be proportional to the square of the applied voltage. Consequently, physical excitation will occur substantially at the second harmonic of the drive frequency. The primary device 105 and the secondary device 115 generally operate at high Q with resonance at or near angular frequency ω. Therefore, the excitation voltage is at a different frequency than the excitation motion. That is, the excitation voltage is at angular frequency ½ω while the excitation motion is at angular frequency ω. Hence, the electrical cross-coupling resulting from the excitation drive signal will not appear as excitation motion to the primary pickoff sensing device 110 because the frequencies differ by 2 to 1. However, if any distortion is present in the excitation drive signal, the second harmonic of the excitation drive signal coupled into the primary pickoff signal will again appear erroneously as excitation motion. This may be particularly problematic in the case of a digital drive waveform, which may have substantial harmonic content.

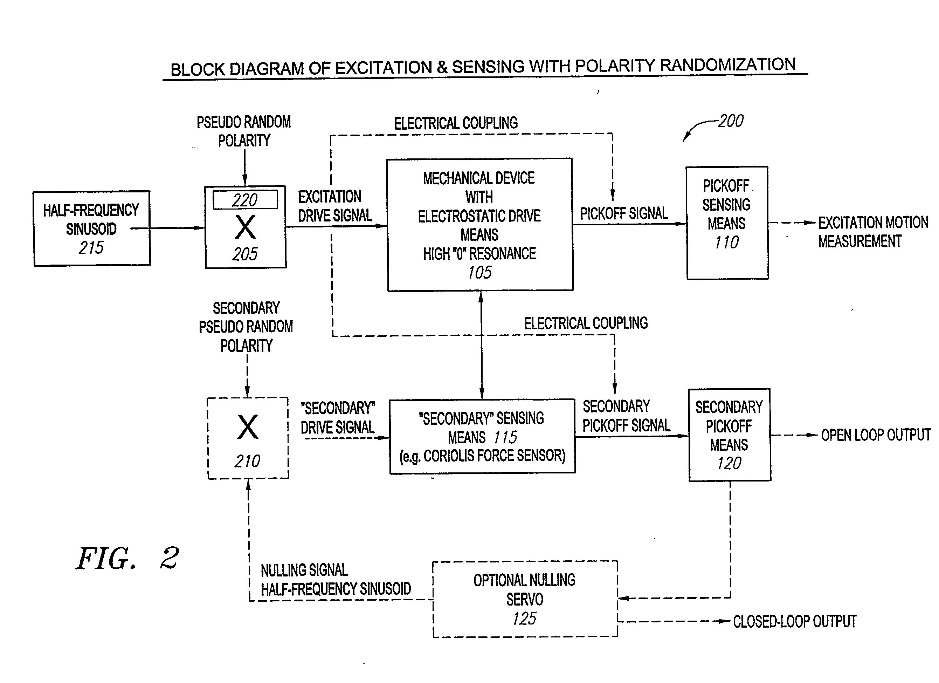

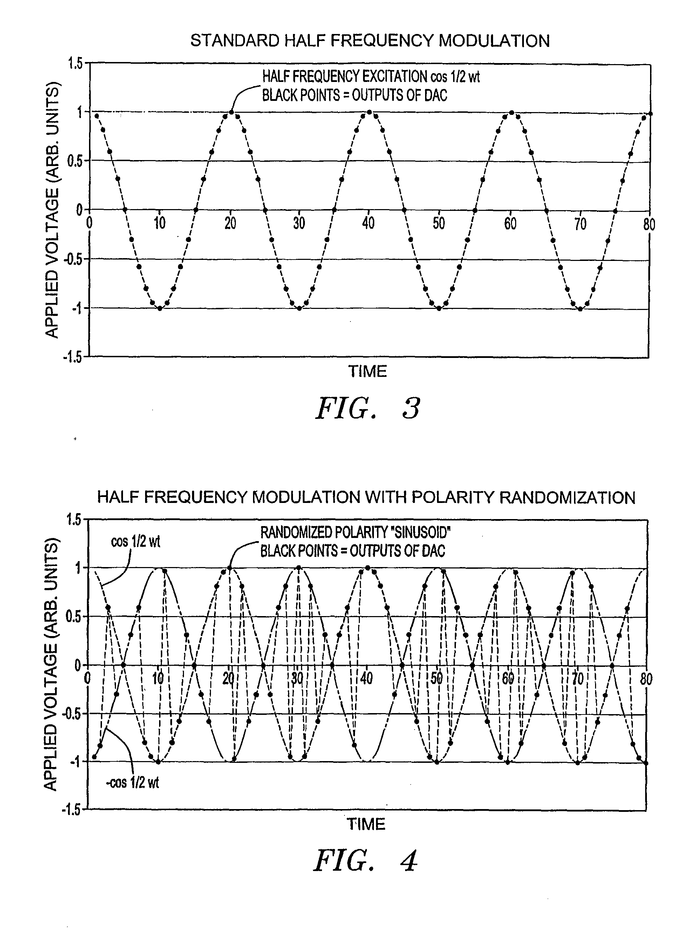

FIG. 2 is a block diagram of a MEMS 200 having a primary random polarity inverter 205, a secondary random polarity inverter 210 and a signal generator 215 for generating a half-frequency sinusoidal signal (Vₑ cos½ωt) as shown in FIG. 3 that is fed into the primary random polarity inverter 205. The functions and structure of the primary random polarity inverter 205 may be the same as the functions and structure of the secondary random polarity inverter 210. Therefore, for simplicity, only the functions and structure of the primary random polarity inverter 205 will be described. The primary random polarity inverter 205 receives a half-frequency sinusoidal signal from the signal generator 215 and multiplies the half-frequency sinusoidal signal by a -1 or +1 to produce an excitation drive signal. The half-frequency sinusoidal signal may be represented by a plurality of digital data values or a plurality of analog (continuous) data values. The excitation drive signal may be represented by the formula V = s(t) * Vₑ cos½ωt, where s(t) = ± 1 randomly with the constraint that the mean value s̅(̅t̅)̅ = 0. The force, which is represented by the equation F ∝ ½V²ₑ (1 + cosωt), is independent of s(t) since the voltage squared eliminates the polarity dependence. The randomization process advantageously allows the excitation drive signal to be made incoherent from the excitation motion at angular frequency ω, thus eliminating the possibility that the excitation drive signal may be erroneously interpreted as excitation motion. That is, the electrical cross coupling from the excitation drive signal will not be interpreted as excitation motion because the excitation motion occurs at or near the angular frequency ω.

The primary random polarity inverter 205 may include a selective inverter 220 for randomly or pseudo-randomly inverting the excitation drive signal. That is, the selective inverter 220 may randomly or pseudo-randomly invert one of more of the digital or analog digital values representing the excitation drive signal. In one embodiment, the selective inverter 220 may be a switch that randomly or pseudo-randomly switches from a +1 state to a -1 state. In one embodiment, the selective inverter 220 may include a digital controller for periodically sampling the half-frequency sinusoidal signal to obtain a digital value and for randomly or pseudo-randomly generating a sign inversion for the digital value and a digital-to-analog converter for receiving the digital value and for generating an excitation drive signal using the digital values to drive the primary device 105. The points shown on the half-frequency sinusoidal signal in FIG. 3 may represent points being output from the digital-to-analog converter. The digital controller may randomly or pseudo-randomly determine whether to invert a particular point(s) of the half-frequency sinusoidal signal. One advantage of pseudo-random generation is the possibility of producing an equal number of +1 states and -1 states over a pre-defined period of time. Other devices for inverting the half-frequency sinusoidal signal may include linear feedback shift registers or other well known pseudorandom bit generators for selecting polarity.

FIG. 4 is a graph showing a half-frequency sinusoidal signal with polarity randomization performed by the primary random polarity inverter 205. As shown in FIG. 4, the polarity inversion may be represented by the dashed lines. That is, each dashed line represents a polarity inversion. For example, the polarity of the third point on the graph has been inverted and therefore, a dashed line is shown from the second point to the third point indicating an inversion from negative to positive and a dashed line is shown from the third point to the fourth point indicating an inversion from positive to negative. In another example, the polarity of the eighth, ninth and tenth points on the graph has been inverted and therefore, a dashed line is shown from the seventh point to the eighth point indicating an inversion from positive to negative and a dashed line is shown from the tenth point to the eleventh point indicating an inversion from negative to positive. As shown, the polarity of each point may be randomly or pseudo-randomly inverted.

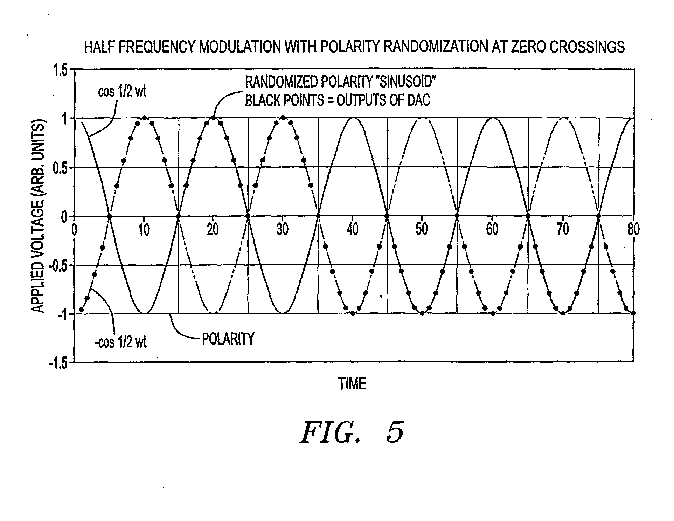

FIG. 5 is a graph showing a half-frequency sinusoidal signal with polarity randomization at or near zero crossings performed by the primary random polarity inverter 205. In one embodiment, the primary random polarity inverter 205 may randomly or pseudo-randomly invert the signal every half-cycle at or near zero crossings of the half-frequency sinusoidal signal. The primary random polarity inverter 205 may or may not switch the polarity every half-cycle. As shown in FIG. 5, the polarity inversion has been performed on the second, fifth and seventh half-cycles.

The polarity inversion at or near zero crossings prevents switching between large positive and negative values. The large excursions from a positive value to a negative value may cause noise spikes. To prevent large excursions, the primary random polarity inverter 205 may hold the polarity constant for at least approximately a half-cycle of the half-frequency sinusoidal signal. To achieve the constant polarity for the half-cycle, the primary random polarity inverter 205 may determine whether the current value of the half-frequency sinusoidal signal is at or near the zero crossing and if so, may randomly or pseudo randomly switch the polarity for the remaining values until the next zero crossing point is detected at which point the primary random polarity inverter 205 may switch the polarity. Since the polarity is randomly or pseudo randomly switched, the polarity may be the same for several successive cycles, switch from -1 to +1 for each half-cycle or alternate in a random or pseudo random manner. In one embodiment, the primary random polarity inverter 205 may switch the polarity at or near zero crossings of the full cycle of the half-frequency sinusoidal signal.

The nulling signal, output from the nulling servo 125, may be a half-frequency sinusoidal signal that may be input into the secondary random polarity inverter 210 to produce a secondary drive signal that is input into the secondary device 115. The random polarity used by the secondary random polarity inverter 210 should be different from the random polarity used by the primary random polarity inverter 205 to ensure that the excitation drive signal does not correlate with the secondary drive signal. This prevents electrical cross-coupling from the excitation drive signal from being interpreted as the secondary drive signal.

Although an exemplary embodiment of the invention has been shown and described, many other changes, combinations, omissions, modifications and substitutions, in addition to those set forth in the above paragraphs, may be made by one having skill in the art without necessarily departing from the scope of this invention. Accordingly, the present invention is not intended to be limited by the preferred embodiments, but is to be defined by reference to the appended claims.

## Claims

1. A method of distinguishing a drive signal from a pickoff signal for attenuating the effect of electrical cross-coupling between the drive signal and the pickoff signal in an electrostatically driven device with capacitive pickoff, the method comprising:
receiving an input signal at a first frequency in the form of a plurality of data values;
randomly changing the polarity of at least one of the plurality of data values of the input signal to form a sensor drive signal;
driving a sensor (110), with the sensor drive signal; and
detecting sensor response for producing a pickoff signal.

2. The method as defined in claim 1, further comprising:
providing a secondary drive signal that is derived from the sensor drive signal;
applying a first polarity randomization to the sensor drive signal; and
applying a second polarity randomization to the secondary drive signal.

3. The method as defined in claim 2, wherein:
the first polarity randomization is different from the second polarity randomization; and
the first polarity randomization is applied at substantially the same time as the second polarity randomization.

4. The method as defined in claim 1, wherein
the sensor drive signal is a half-frequency sinusoidal signal and the plurality of data values are analog data values or digital data values; and
the changing at least one of the plurality of data values includes inverting at least one of the plurality of data values.

5. The method as defined in claim 1, wherein the first frequency is about 1/2ω and the frequency of the pickoff signal is about ω, wherein ω is angular frequency.

6. The method as defined in claim 1, wherein the changing the polarity of at least one of the plurality of data values includes randomly or pseudo-randomly inverting at least one of the plurality of data values.

7. The method as defined in claim 1, wherein the changing the polarity of at least one of the plurality of data values includes randomly or pseudo-randomly switching at least one of the plurality of data values from a positive state to a negative state or from a negative state to a positive state.

8. The method as defined in claim 1, wherein the changing the polarity of at least one of the plurality of data values occurs at approximately a zero crossing of the sensor drive signal.

9. The method as defined in claim 1, wherein the changing the polarity of at least one of the plurality of data values occurs for at least approximately a half-cycle of the sensor drive signal.

10. The method as defined in claim 1, wherein the changing the polarity of at least one of the plurality of data values occurs for at least approximately an integer number of half-cycles of the sensor drive signal.

11. The method as defined in claim 1, wherein the changing the polarity of at least one of the plurality of data values includes inverting the data values at approximately a zero crossing of the input signal.

12. The method as defined in claim 11, wherein the inverting the data values occurs for at least approximately a half-cycle of the input signal.

13. The method as defined in claim 11, wherein the inverting the data values occurs for at least approximately an integer number of half-cycles of the input signal.

14. The method as defined in claim 11, wherein the inverting the data values includes randomly or pseudo-randomly switching at least one of the data values from a positive value to a negative value or from a negative value to a positive value.

15. The method as defined in claim 1, further comprising receiving a secondary input signal in the form of a plurality of data values.

16. The method as defined in claim 1, further comprising a resonant member (105) coupled to the sensor (110), oscillating at a second frequency.

17. The method as defined in claim 16, wherein the resonant member (105) is selected from a group consisting of a micro-electromechanical system and a gyroscope.

18. The method as defined in claim 1, wherein the changing of the polarity of at least one of the plurality of data values occurs within a defined half-cycle of the input signal.

## Patentansprüche

1. Verfahren zur Unterscheidung eines Antriebssignals von einem Abgriffsignal zum Dämpfen der Wirkung der elektrischen Überkopplung zwischen dem Antriebssignal und dem Abgriffsignal in einer elektrostatisch angetriebenen Vorrichtung mit kapazitivem Abgriff, wobei das Verfahren Folgendes umfasst:
Empfangen eines Eingangssignals mit einer ersten Frequenz in Form einer Vielzahl von Datenwerten;
zufälliges Ändern der Polarität mindestens eines der Vielzahl von Datenwerten des Eingangssignals, um ein Sensorantriebssignal zu bilden;
Antreiben eines Sensors (110) mit dem Sensorantriebssignal und
Erfassen der Reaktion des Sensors zur Erzeugung eines Abgriffsignals.

2. Verfahren nach Anspruch 1, das ferner Folgendes umfasst:
Bereitstellen eines sekundären Antriebssignals, das von dem Sensorantriebssignal abgeleitet wird;
Anwenden einer ersten Polaritätsrandomisierung auf das Sensorantriebssignal und
Anwenden einer zweiten Polaritätsrandomisierung auf das sekundäre Antriebssignal.

3. Verfahren nach Anspruch 2, wobei:
sich die erste Polaritätsrandomisierung von der zweiten Polaritätsrandomisierung unterscheidet und
die erste Polaritätsrandomisierung zu im Wesentlichen der gleichen Zeit wie die zweite Polaritätsrandomisierung angewendet wird.

4. Verfahren nach Anspruch 1, wobei
das Sensorantriebssignal ein sinusförmiges Signal mit halber Frequenz ist und die Vielzahl der Datenwerte analoge Datenwerte oder digitale Datenwerte sind und das Ändern mindestens eines der Vielzahl von Datenwerten das Invertieren mindestens eines der Vielzahl von Datenwerten umfasst.

5. Verfahren nach Anspruch 1, wobei die erste Frequenz etwa 1/2 ω beträgt und die Frequenz des Abgriffsignals etwa ω beträgt, wobei ω die Winkelfrequenz ist.

6. Verfahren nach Anspruch 1, wobei das Ändern der Polarität mindestens eines der Vielzahl von Datenwerten das zufällige oder pseudo-zufällige Invertieren mindestens eines der Vielzahl von Datenwerten umfasst.

7. Verfahren nach Anspruch 1, wobei das Ändern der Polarität mindestens eines der Vielzahl von Datenwerten das zufällige oder pseudo-zufällige Umschalten mindestens eines der Vielzahl von Datenwerten von einem positiven Zustand in einen negativen Zustand oder von einem negativen Zustand in einen positiven Zustand umfasst.

8. Verfahren nach Anspruch 1, wobei das Ändern der Polarität mindestens eines der Vielzahl von Datenwerten etwa bei einem Nulldurchgang des Sensorantriebssignals auftritt.

9. Verfahren nach Anspruch 1, wobei das Ändern der Polarität mindestens eines der Vielzahl von Datenwerten während mindestens etwa eines Halbzyklus des Sensorantriebssignals auftritt.

10. Verfahren nach Anspruch 1, wobei das Ändern der Polarität mindestens eines der Vielzahl von Datenwerten während mindestens etwa einer ganzzahligen Anzahl von Halbzyklen des Sensorantriebssignals auftritt.

11. Verfahren nach Anspruch 1, wobei das Ändern der Polarität mindestens eines der Vielzahl von Datenwerten das Invertieren der Datenwerte bei etwa einem Nulldurchgang des Eingangssignals umfasst.

12. Verfahren nach Anspruch 11, wobei die Invertierung der Datenwerte während mindestens etwa eines Halbzyklus des Eingangssignals auftritt.

13. Verfahren nach Anspruch 11, wobei die Invertierung der Datenwerte während mindestens etwa einer ganzzahligen Anzahl von Halbzyklen des Eingangssignals auftritt.

14. Verfahren nach Anspruch 11, wobei die Invertierung der Datenwerte das zufällige oder pseudo-zufällige Umschalten mindestens eines der Vielzahl von Datenwerten von einem positiven Wert zu einem negativen Wert oder von einem negativen Wert zu einem positiven Wert umfasst.

15. Verfahren nach Anspruch 1, das ferner das Empfangen eines sekundären Eingangssignals in Form einer Vielzahl von Datenwerten umfasst.

16. Verfahren nach Anspruch 1, das ferner ein Resonanzelement (105) umfasst, dass mit dem Sensor (110) gekoppelt ist und mit einer zweiten Frequenz schwingt.

17. Verfahren nach Anspruch 16, wobei das Resonanzelement (105) aus einer Gruppe ausgewählt ist, die aus einem mikroelektromechanischen System und einem Gyroskop besteht.

18. Verfahren nach Anspruch 1, wobei das Ändern der Polarität mindestens eines der Vielzahl von Datenwerten innerhalb eines definierten Halbzyklus des Eingangssignals auftritt.

## Revendications

1. Procédé de distinction d'un signal de commande d'un signal de détection pour atténuer l'effet de la diaphonie électrique entre le signal de commande et le signal de détection dans un dispositif à commande électrostatique avec un capteur capacitif, ce procédé comprenant :
la réception d'un signal d'entrée à une première fréquence sous la forme d'une pluralité de valeurs de données ;
le changement aléatoire de la polarité d'au moins une de la pluralité de valeurs de données du signal d'entrée pour former un signal de commande de capteur ;
la commande d'un capteur (110) avec le signal de commande de capteur ; et
la détection de la réponse du capteur pour produire un signal de détection.

2. Procédé selon la revendication 1, comprenant en outre :
la fourniture d'un signal de commande secondaire qui est obtenu à partir du signal de commande du capteur ;
l'application d'une première hasardisation de polarité sur le signal de commande du capteur ; et
l'application d'une deuxième hasardisation de polarité sur le signal de commande secondaire.

3. Procédé selon la revendication 2, dans lequel :
la première hasardisation de polarité est différente de la deuxième hasardisation de polarité ; et
la première hasardisation de polarité est appliquée essentiellement en même temps que la deuxième hasardisation de polarité.

4. Procédé selon la revendication 1, dans lequel :
le signal de commande du capteur est un signal sinusoïdal à demi-fréquence et la pluralité des valeurs de données sont des valeurs de données analogiques ou des valeurs de données numériques ; et
le changement d'au moins une de la pluralité des valeurs de données comprend l'inversion d'au moins une de la pluralité de valeurs de données.

5. Procédé selon la revendication 1, dans lequel la première fréquence est environ ½ ω et la fréquence du signal de détection est environ ω, ω étant la fréquence angulaire.

6. Procédé selon la revendication 1, dans lequel le changement de la polarité d'au moins une de la pluralité de valeurs de données comprend l'inversion de manière aléatoire ou pseudo-aléatoire d'au moins une de la pluralité de valeurs de données.

7. Procédé selon la revendication 1, dans lequel le changement de la polarité d'au moins une de la pluralité de valeurs de données comprend la commutation aléatoire ou pseudo-aléatoire d'au moins une de la pluralité de valeurs de données d'un état positif à un état négatif ou d'un état négatif à un état positif.

8. Procédé selon la revendication 1, dans lequel le changement de la polarité d'au moins une de la pluralité de valeurs de données se produit à environ un passage par zéro du signal de commande du capteur.

9. Procédé selon la revendication 1, dans lequel le changement de la polarité d'au moins une de la pluralité de valeurs de données se produit à environ un demi-cycle du signal de commande du capteur.

10. Procédé selon la revendication 1, dans lequel le changement de la polarité d'au moins une de la pluralité de valeurs de données se produit pendant environ un nombre entier de demi-cycles du signal de commande du capteur.

11. Procédé selon la revendication 1, dans lequel le changement de la polarité d'au moins une de la pluralité de valeurs de données comprend l'inversion des valeurs de données à environ un passage par zéro du signal d'entrée.

12. Procédé selon la revendication 11, dans lequel l'inversion des valeurs de données se produit pendant environ un demi-cycle du signal d'entrée.

13. Procédé selon la revendication 11, dans lequel l'inversion des valeurs de données se produit pendant au moins environ un nombre entier de demi-cycles du signal d'entrée.

14. Procédé selon la revendication 11, dans lequel l'inversion des valeurs de données comprend la commutation aléatoire ou pseudo-aléatoire d'au moins une des valeurs de données d'une valeur positive à une valeur négative ou d'une valeur négative à une valeur positive.

15. Procédé selon la revendication 1, comprenant en outre la réception d'un signal d'entrée secondaire sous la forme d'une pluralité de valeurs de données.

16. Procédé selon la revendication 1, comprenant en outre un élément résonnant (105) couplé au capteur (110), oscillant à une deuxième fréquence.

17. Procédé selon la revendication 16, dans lequel l'élément résonnant (105) est choisi parmi un groupe comprenant un système micro-électromécanique et un gyroscope.

18. Procédé selon la revendication 1, dans lequel le changement de la polarité d'au moins une de la pluralité de valeurs de données se produit dans les limites d'un demi-cycle défini du signal d'entrée.
